# EUROPÄISCHE PATENTSCHRIFT

(11) **EP 1 442 319 B1**
(45) Veröffentlichungstag und Bekanntmachung des Hinweises auf die Patenterteilung: **09.08.2006**
(21) Anmeldenummer: 02781146.2
(22) Anmeldetag: 23.10.2002
(51) Int. Cl.: G01S 17/02

(54) **ENTFERNUNGSMESSENDES LASERLICHTGITTER**
LASER GRID FOR MEASURING DISTANCE
RESEAU DE LUMIERE LASER DESTINE A LA MESURE DE DISTANCE

(30) Priorität: 08.11.2001 DE 10154797
(43) Veröffentlichungstag der Anmeldung: 04.08.2004
(73) Patentinhaber: SIEMENS AKTIENGESELLSCHAFT, 80333 München (DE)
(72) Erfinder: WASCHKE, Holger, 38162 Cremlingen (DE); MENGEL, Peter, 82223 Eichenau (DE)
(86) Internationale Anmeldenummer: PCT/DE2002/003996
(87) Internationale Veröffentlichungsnummer: WO 2003/040755

(56) Entgegenhaltungen:
- WO-A-96/18114
- DE-A- 19 757 595
- US-A- 4 317 137
- US-A- 4 902 126
- MEINERT H-T: "HINTERGRUNDAUSBLENDUNG BEI LICHTTASTERN" FEINWERKTECHNIK + MESSTECHNIK, CARL HANSER VERLAG. MUNCHEN., DE, Bd. 97, Nr. 6, 1. Juni 1989 (1989-06-01), Seiten 261-264, XP000098231

## Beschreibung

Die Erfindung betrifft ein Lichtgitter mit mehreren Sende- und Empfangselementen.

Derartige Lichtgitter mit mehreren, zeilenförmig angeordneten Einzellichtschranken werden zur Absicherung eines Gefahrenbereichs eingesetzt. Bei Eindringen einer Person oder eines Gegenstands in den Überwachungsbereich werden die Lichtstrahlen unterbrochen und daraufhin ein Schaltvorgang ausgelöst, z.B. ein Warnsignal oder eine sichere Abschaltung einer Maschine.

Herkömmliche Lichtgitter erfordern die Installation eines Senders und eines Empfängers an den äußersten Grenzen des Zuganges zum Gefahrenbereich oder zumindest an einer Seite einen Spiegel und an der anderen ein kombiniertes Sender-Empfänger-Modul. Außerdem ist es nur mit höherem Aufwand bei diesen Lichtgittern möglich, unterschiedliche Bereiche zu definieren, bei deren Verletzung unterschiedliche Systemreaktionen ausgelöst werden sollen. US-A-4 902 126 offenbart ein entfernungsmessendes Lichtgitter gemäß dem Oberbegriff des Anspruchs 1.

Der Erfindung liegt die Aufgabe zugrunde, ein Lichtgitter der oben genannten Art dahingehend zu verbessern, dass nur eine einseitige Installation erforderlich ist, um eine Person oder einen Gegenstand im Überwachungsbereich zu erfassen.

Die Aufgabe wird dadurch gelöst, dass die Sende- und Empfangselemente in punktförmigen Sensoreinheiten zusammengefasst sind, die jeweils mindestens eine Laserdiode und zwei lichtempfindliche Pixel aufweisen und die in einem Gehäuse zeilenförmig angeordnet sind.

Vorteilhafte Weiterbildungen der Erfindung sind den Unteransprüchen 2 bis 9 zu entnehmen.

Eine Ausführungsform der Erfindung wird im Folgenden anhand einer Zeichnung näher erläutert. Es zeigen:
- FIG 1: ein erfindungsgemäßes Laserlichtgitter und
- FIG 2: eine Anordnung zur Überwachung des Umfelds einer Maschine mit dem Laserlichtgitter gemäß FIG 1

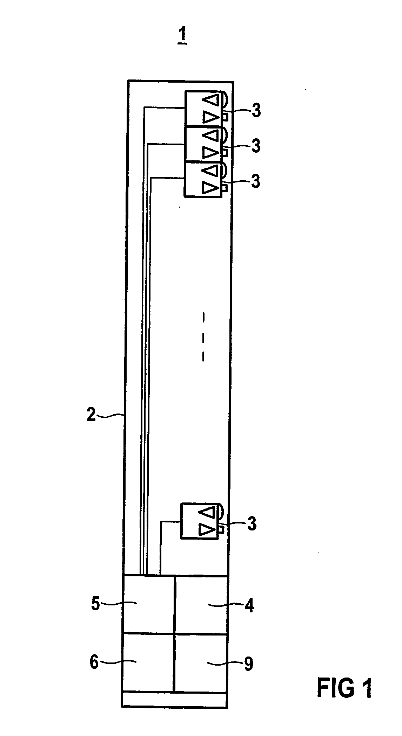

In FIG 1 ist ein erfindungsgemäßes Laserlichtgitter 1 zur Entfernungsmessung als Modul dargestellt. Es weist ein Gehäuse 2 auf, in dem punktförmige Sensoreinheiten 3 zeilenförmig angeordnet sind, die als 3D-CMOS-Sensoreinheiten ausgeführt sind (siehe DE 197 57 595 C2). Das Messprinzip dieser Sensoreinheiten 3 ist in der genannten Patentschrift erläutert. Die Sensoreinheit 3 besteht aus einer Laserdiode und mindestens zwei lichtempfindlichen Pixeln, die mit unterschiedlichen Zeitfenstern eine Integration der Intensität des reflektierten Lichtes der zugehörigen Laserdiode durchführen.

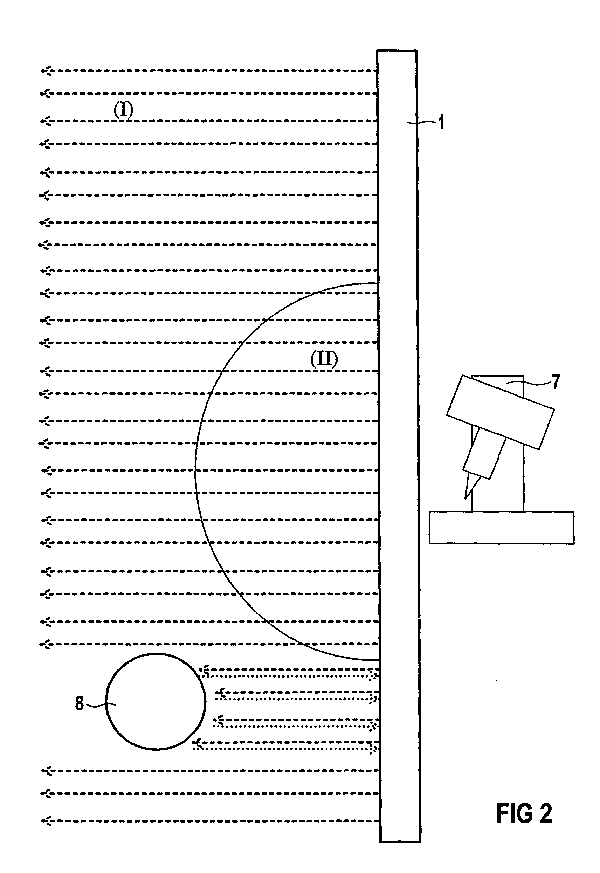

In dem geschlossenen Gehäuse 2 befindet sich außerdem ein Taktgeber 4, ein Analog/Digital-Wandler 5 und eine Verarbeitungslogik 6. Die Sensoreinheiten 3 werden nacheinander durch den Taktgeber 4 ausgelöst und führen unabhängig voneinander Einzelmessungen durch, die dann als analoger Messwert an der Sensoreinheit 3 zur Verfügung stehen. Je Sensoreinheit werden im vorliegenden Ausführungsbeispiel zwei Messungen vorgenommen, zu denen die analogen Messwerte durch den Analog/Digital-Wandler 5 ausgelesen und der nachgeschalteten Verarbeitungslogik 6 zur weiteren Verarbeitung bereitgestellt werden. Die Verarbeitungslogik 6 kann zur Erfüllung der Überwachungsaufgabe folgende Funktionen übernehmen:
a) Die Errechnung der Entfernung jedem Messwertepaar gemäß dem Verfahren in der obengenannten Patentschrift.
b) Mit Hilfe eines Hintergrundfilters eine Hintergrundfilterung, mit der die Messwerte von einer Menge statischer Hintergrundwerte subtrahiert werden, um eine Änderung erfassen zu können. Das Hintergrundbild kann durch eine Nullmessung bei Inbetriebnahme oder durch Programmierung gespeichert werden.
c) Mit Hilfe eines Schwellwertfilters eine Schwellwertfilterung zur Identifikation von Objekten/Personen in unterschiedlichen Annäherungszonen, wie in FIG 2 dargestellt. Beispielhaft ist hier die Annäherung an eine Maschine 7 dargestellt. Durch die zweidimensionale Messung, durch Entfernung vom Lichtgitter und Position längs des Lichtgitters kann die Anwesenheit einer Person 8 innerhalb der unterschiedlichen Annäherungszonen I und II in FIG 2 erkannt werden. So kann z.B. beim Eindringen in Zone I ein Warnsignal gegeben werden und beim Eindringen in Zone II die sichere Abschaltung der Maschine 7 erfolgen. Da die Sensoreinheiten 3 eine Entfernungsmessung mit Genauigkeiten im Zentimeterbereich durchführen, lassen sich auch anders geformte Annäherungszonen definieren.
d) Eine logische Verknüpfung der Einzelmessungen der Sensoreinheiten 3 in FIG 1 zur näherungsweisen Erfassung der Objektgröße, z.B. zwecks Filterung von Kleinstgegenständen.
e) Eine Mutingfunktion, d.h. eine gezielte Ausblendung eines oder mehrerer Einzelmessungen, z.B. um bestimmten Objekten die Annäherung zu erlauben. Diese Funktion wäre beispielsweise erforderlich, wenn Gegenstände einer Fertigungsstrasse zugeführt werden müssten.

Die Verarbeitungslogik 6 gemäß FIG 1 kann über ein Interface 9 mit einer externen Mess- und Überwachungsanlage verbunden sein, die dann die Zustandsmeldung des Laserlichtgitters 1 konkret in eine Schaltreaktion umsetzt, z.B. Unterbrechung der Stromversorgung einer Maschine. Das Interface 9 kann je nach Anwendungsfall unterschiedlich gestaltet werden. So sind Relaisausgänge bzw. Optokoppler, AS-Interface-, I²C-Buskupplungen oder Industrial Ethernet möglich, abhängig davon wieviele Einzelinformationen eines Laserlichtgitters 1 benötigt werden, und wieviele solche Module zusammengefasst werden.

I²C-Bus und ASI-Bus erlauben auch einfachste Verkabelungen und die schnelle Übertragung von komplexeren Daten.

Für eine sicherheitsgerichtete Anwendung kann bei Bereitstellung eines festen Hintergrundes, z.B. eine Wand, eine permanente Selbstüberwachung durch Vergleich mit programmierten Grunddaten erfolgen.

## Patentansprüche

1. Entfernungsmessendes Lichtgitter mit mehreren Sende- und Empfangselementen,
**dadurch gekennzeichnet, dass** die Sende- und Empfangselemente in punktförmigen Sensoreinheiten (3) zusammengefasst sind, die jeweils mindestens eine Laserdiode und zwei lichtempfindliche Pixel aufweisen und die in einem Gehäuse (2) zeilenförmig angeordnet sind.

2. Entfernungsmessendes Lichtgitter nach Anspruch 1,
**dadurch gekennzeichnet, dass** die Sensoreinheiten als 3D-CMOS-Sensoren (3) ausgeführt sind.

3. Entfernungsmessendes Lichtgitter nach Anspruch 1 oder 2,
**dadurch gekennzeichnet, dass** das Gehäuse (2) einen Taktgeber (4) einen Analog-Digital-Wandler (5) und eine Verarbeitungslogik (6) umfasst, wobei der Taktgeber (4) zur Auslösung der Sensoreinheiten (3) dient, die daraufhin Einzelmessungen ausführen, die als analoger Messwert an der Sensoreinheit (3) zur Verfügung stehen und dem Analog-Digital-Wandler (5) ausgelesen und der Verarbeitungslogik (6) zur weiteren Verarbeitung bereitgestellt werden.

4. Entfernungsmessendes Lichtgitter nach einem der vorangehenden Ansprüche,
**dadurch gekennzeichnet, dass** die Verarbeitungslogik (6) mindestens die Funktion der Errechnung der jeweiligen Entfernung aus den Messwerten enthält.

5. Entfernungsmessendes Lichtgitter nach einem der vorangehenden Ansprüche,
**dadurch gekennzeichnet*,* dass** die Verarbeitungslogik (6) einen Hintergrundfilter aufweist, der die Messwerte von einer Menge statischer Hintergrundwerte subtrahiert.

6. Entfernungsmessendes Lichtgitter nach einem der vorangehenden Ansprüche,
**dadurch gekennzeichnet, dass** die Verarbeitungslogik (6) einen Schwelwertfilter zur Identifikation von Objekten/Personen in unterschiedlichen Annäherungszonen aufweist.

7. Entfernungsmessendes Lichtgitter nach einem der vorangehenden Ansprüche,
**dadurch gekennzeichnet, dass** die Verarbeitungslogik (6) zur logischen Verknüpfung von Messwerten verschiedene Sensoreinheiten (3) dient, um Objektgrößen zu erfassen.

8. Entfernungsmessendes Lichtgitter nach einem der vorangehenden Ansprüche,
**dadurch gekennzeichnet, dass** die Verarbeitungslogik (6) eine Mutingfunktion aufweist, mit der gezielt eine oder mehrere Messwerte ausgeblendet werden können.

9. Entfernungsmessendes Lichtgitter nach einem der vorangehenden Ansprüche,
**dadurch gekennzeichnet, dass** die Verarbeitungslogik (6) mit einem Interface (9) zum Anschluss zum Beispiel an externe Mess- und Überwachungsanlagen verbunden ist.

## Claims

1. Distance measuring light grid having a number of transmitting and receiving elements, **characterized in that** the transmitting and receiving elements are combined in punctiform sensor units (3) that in each case have at least one laser diode and two photosensitive pixels and that are arranged in the form of a line in a housing (2) .

2. Distance measuring light grid according to Claim 1, **characterized in that** the sensor units are designed as 3D-CMOS sensors (3).

3. Distance measuring light grid according to Claim 1 or 2, **characterized in that** the housing (2) comprises a clock generator (4), an analogue-to-digital converter (5) and a processing logic circuit (6), the clock generator (4) serving to trigger the sensor units (3) which thereupon execute individual measurements that are available as analogue measured value at the sensor unit (3) and are read out of the analogue-to-digital converter (5) and made available to the processing logic circuit (6) for further processing.

4. Distance measuring light grid according to one of the preceding claims, **characterized in that** the processing logic circuit (6) includes at least the function of calculating the respective distance from the measured values.

5. Distance measuring light grid according to one of the preceding claims, **characterized in that** the processing logic circuit (6) has a background filter that subtracts the measured values from a set of static background values.

6. Distance measuring light grid according to one of the preceding claims, **characterized in that** the processing logic circuit (6) has a threshold filter for identifying objects/persons in different approach zones.

7. Distance measuring light grid according to one of the preceding claims, **characterized in that** the processing logic circuit (6) serves for logically combining measured values of different sensor units (3) in order to detect object sizes.

8. Distance measuring light grid according to one of the preceding claims, **characterized in that** the processing logic circuit (6) has a muting function with the aid of which one or more measured values can be specifically masked out.

9. Distance measuring light grid according to one of the preceding claims, **characterized in that** the processing logic circuit (6) is connected to an interface (9) for connection, for example, to external measuring and monitoring systems.

## Revendications

1. Rideau de lumière télémétrique comportant plusieurs éléments émetteurs et récepteurs, **caractérisé en ce que** les éléments émetteurs et récepteurs sont regroupés en unités de captage ponctuelles (3), dont chacune comprend au moins une diode laser et deux pixels photosensibles, et qui sont disposées en rangées dans un boîtier (2).

2. Rideau de lumière télémétrique selon la revendication 1, **caractérisé en ce que** les unités de captage sont configurées comme des capteurs 3D-CMOS (3).

3. Rideau de lumière télémétrique selon la revendication 1 ou 2, **caractérisé en ce que** le boîtier (2) comprend un générateur d'horloge (4), un convertisseur analogique/numérique (5) et une logique de traitement (6), le générateur d'horloge (4) servant à déclencher les unités de captage (3), qui vont ensuite exécuter des mesures individuelles, qui seront à disposition en tant que valeur de mesure analogique au niveau de l'unité de captage (3) et qui sont lues par le convertisseur analogique/numérique (5), et sont à la disposition de la logique de traitement (6) pour traitement ultérieur.

4. Rideau de lumière télémétrique selon l'une des revendications précédentes, **caractérisé en ce que** la logique de traitement (6) contient au moins la fonction de calcul, à partir des valeurs de mesure, de la distance correspondante.

5. Rideau de lumière télémétrique selon l'une des revendications précédentes, **caractérisé en ce que** la logique de traitement (6) comprend un filtre de signaux de fond, qui soustrait les valeurs de mesure d'une certaine quantité de valeurs de fond statiques.

6. Rideau de lumière télémétrique selon l'une des revendications précédentes, **caractérisé en ce que** la logique de traitement (6) comprend un filtre de seuil destiné à identifier des objets/des personnes dans différentes zones d'approche.

7. Rideau de lumière télémétrique selon l'une des revendications précédentes, **caractérisé en ce que** la logique de traitement (6) sert à la liaison logique de valeurs de mesure de diverses unités de captage (3), pour détecter la taille de certains objets.

8. Rideau de lumière télémétrique selon l'une des revendications précédentes, **caractérisé en ce que** la logique de traitement (6) comprend une fonction de silencieux, à l'aide de laquelle il est possible de supprimer d'une manière ciblée une ou plusieurs valeurs de mesure.

9. Rideau de lumière télémétrique selon l'une des revendications précédentes, **caractérisé en ce que** la logique de traitement (6) est reliée à une interface (9) destinée au raccordement par exemple à des installations externes de mesure et de surveillance.
